Europäisches Patentamt

(19) European Patent Office

Office européen des brevets

(11) Numéro de publication : **0 136 240**
B1

(12) **FASCICULE DE BREVET EUROPÉEN**

(45) Date de publication du fascicule du brevet :
21.10.87

(51) Int. Cl.⁴ : **B 62 D 53/00, B 60 D 1/06**

(21) Numéro de dépôt : **84401939.8**

(22) Date de dépôt : **27.09.84**

(54) **Dispositif d'attelage articule pour atteler une remorque à un vehicule.**

(30) Priorité : 27.09.83 FR 8315293
25.09.84 FR 8414675

(43) Date de publication de la demande :
03.04.85 Bulletin 85/14

(45) Mention de la délivrance du brevet :
21.10.87 Bulletin 87/43

(84) Etats contractants désignés :
AT BE CH DE FR GB IT LI NL SE

(56) Documents cités :
CA-A-  943 989
DE-A- 2 454 010
DE-A- 2 901 435
FR-A- 1 250 559
FR-A- 2 359 008
FR-A- 2 440 307
GB-A-  603 509
GB-A- 1 332 203
GB-A- 2 129 750
US-A- 3 955 831
US-A- 4 092 035

(73) Titulaire : **ASSOCIATION OUVRIERE DES COMPAGNONS DU DEVOIR DU TOUR DE FRANCE ATELIERS SAINTE-CATHERINE**
**Route de Rambouillet**
**F-78680 Epône (FR)**

(72) Inventeur : **Deschamp, Roger**
**22, rue de la Côte**
**F-92500 Rueil Malmaison (FR)**
Inventeur : **Talon, Marc**
**47, rue Coursimault**
**F-72120 Saint Calais (FR)**

(74) Mandataire : **Martin, Jean-Jacques et al**
**Cabinet REGIMBEAU 26, Avenue Kléber**
**F-75116 Paris (FR)**

Jouve, 18, rue St-Denis, 75001 Paris, France

## Description

L'invention concerne le domaine des attelages de remorques à un véhicule léger, telles que des caravanes ou remorques de camping, et plus particulièrement leur système de liaison avec le véhicule destiné à les tracter.

Il existe déjà de nombreux types d'attelages de remorques, s'organisant essentiellement selon deux familles : les attelages articulés et les attelages fixes.

Le plus classique des attelages articulés comporte un timon central fixé à la remorque à une extrémité, et présentant en son autre extrémité un boîtier destiné à coopérer avec une rotule d'accrochage prévue à l'arrière du véhicule. Pour des remorques légères, le timon présente une longueur de l'ordre d'une demi-longueur de véhicule plus une garde supplémentaire : avec cette configuration, un espace est réservé entre l'arrière du véhicule et l'avant de la remorque pour le balayage de l'ensemble en virage, ce qui a pour conséquence de produire un encombrement en longueur important ; de plus, lors d'un freinage ou d'un braquage intempestif du véhicule avec une remorque en charge non freinée, cet espace relativement important risque de provoquer un écrasement « en portefeuille » de l'ensemble attelé.

Afin de réduire cet encombrement en longueur, il a été proposé de prévoir un attelage à un point d'articulation et de traction situé à l'avant du toit du véhicule, à l'image de certains semi-remorques lourds. Ainsi, dans le brevet français n° 2 359 008, il est décrit un châssis amovible, amarré sous la caisse du véhicule et comportant un appui sur le toit permettant le pivotement de la remorque, et un chariot à débattement longitudinal dont le système de ressorts est destiné à compenser les charges dynamiques lors du freinage du véhicule. Un exemple analogue est décrit dans le brevet britannique n° 1 332 203, dans lequel est prévu un pivot central à ventouse sur le toit du véhicule.

Ces attelages ne sont pas toujours bien adaptés à des routes imparfaitement planes, et n'offrent pas un contrôle suffisant des effets de lacet, de roulis et de galop de la remorque.

Pour offrir un meilleur contrôle des effets précédents, l'autre famille d'attelages utilisés propose des attelages fixes à plusieurs points de fixation, et en particulier des attelages du type comportant un point d'accrochage situé à l'arrière du véhicule et assurant la traction de la remorque, et une structure reliant la remorque à au moins un point de fixation agencé sur un support disposé à l'avant du toit du véhicule, conformément au préambule de la revendication 1.

Un assemblage rigide de ce type est décrit dans le brevet français n° 2 440 307, montrant un système à trois points de fixation, dont un est à l'arrière du véhicule et les deux autres sur le toit avec un agencement latéral ; le comportement en lacet et en roulis d'un tel assemblage rigide est meilleur qu'avec les systèmes articulés classiques, mais la rigidité d'ensemble gêne le passage de creux et de bosses qui est plus aisé avec ces systèmes articulés qui offrent alors plus de souplesse. Un exemple analogue est décrit dans la demande de brevet allemand n° 2 901 435 montrant un dispositif d'attelage fixe présentant un système à trois rotules, dont une est à l'arrière comme pour les attelages simples articulés pour remorques légères, et les deux autres sont disposées latéralement sur le toit du véhicule.

L'invention vise à pallier les inconvénients des attelages antérieurs rappelés plus haut, en combinant le mieux possible les avantages des deux familles d'attelages, articulés et fixes.

Ce problème est résolu dans le cadre de l'invention, en prévoyant un dispositif d'attelage dans lequel le point de fixation autorise un coulissement longitudinal et une certaine rotation de l'extrémité correspondante de la structure dans un plan vertical longitudinal du véhicule tracteur, conformément à la partie caractéristique de la revendication 1.

Selon une première variante, la structure est essentiellement formée d'une paire de brancards, et l'extrémité avant de chaque brancard est reçue à coulissement dans une glissière associée fixée sur le support, de sorte que l'on obtient ainsi deux points latéraux de fixation à coulisse autorisant différentes orientations des brancards dans un plan vertical ; les glissières peuvent être fixées sur le support de façon à être à l'intérieur de l'empattement du véhicule, et de préférence à mi-longueur, de préférence par l'intermédiaire d'éléments anti-vibratoires, et présentent avantageusement une forme intérieure convexe.

Selon une deuxième variante, la structure est essentiellement formée d'une paire de brancards se rejoignant vers l'avant en une extrémité commune reçue à coulissement dans une glissière centrale associée fixée sur le support, de sorte que l'on obtient ainsi un point central de fixation à coulisse autorisant différentes orientations des brancards dans un plan vertical ; la glissière centrale peut être alors fixée sur le support par l'intermédiaire d'éléments anti-vibratoires, présenter une forme intérieure convexe, et être située à l'intérieur de l'empattement du véhicule, et de préférence à mi-longueur.

La remorque comporte de préférence un timon auquel est fixé un boîtier d'attelage pour une rotule d'accrochage prévue à l'arrière du véhicule, avec interposition d'un amortisseur autorisant un débattement vertical ; la remorque peut aussi comporter une barre stabilisatrice transversale, de laquelle est solidaire le boîtier d'attelage, permettant un appui sur l'arrière du véhicule en deux points situés de part et d'autre dudit boîtier, les points d'appui et le point d'accrochage étant de préférence alignés, et la barre pouvant comporter en outre un organe de réglage en hauteur pour chacun des deux appuis.

D'autres caractéristiques et avantages apparaîtront plus clairement à la lumière de la description et des figures du dessin annexé, illustrant des modes particuliers de réalisation, en référence aux figures où :

les figures 1 et 2 illustrent schématiquement deux types d'attelages articulés, le premier classique avec un espace D important, l'autre conforme à l'invention avec un espace D faible, voire nul ;

la figure 3 est une vue en plan illustrant schématiquement une première variante de dispositif d'attelage conforme à l'invention ;

la figure 4 est une vue de dessus de l'attelage de la figure 3 ;

la figure 5 est une représentation partielle en perspective du dispositif de la figure 3 ;

la figure 6 est une vue en plan illustrant schématiquement une deuxième variante de dispositif d'attelage conforme à l'invention ;

la figure 7 est une vue de dessus de l'attelage de la figure 6 ;

la figure 8 est une représentation partielle en perspective du dispositif de la figure 6 ;

la figure 9 est une coupe partielle selon IX-IX de la figure 7 ;

la figure 10 est une vue partielle de la zone d'accrochage arrière ;

les figures 11a, 11b, 11c illustrent schématiquement le comportement dans un plan vertical du dispositif de l'invention, respectivement lors d'un passage sur plat, en creux ou en bosse.

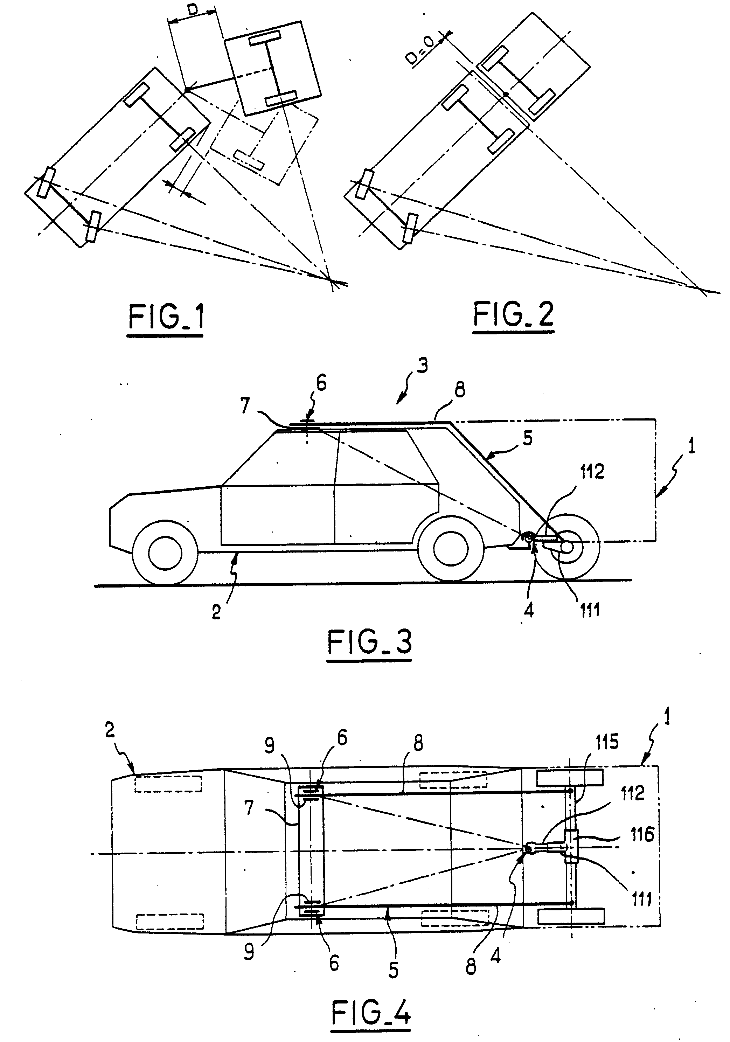

Sur la figure 1, une remorque est attelée à un véhicule par un dispositif articulé classique, et l'espace D réservé entre l'arrière du véhicule et l'avant de la remorque pour le balayage de l'ensemble en virage est important. Par contre, figure 2, l'utilisation d'un dispositif d'attelage articulé conforme à l'invention permet d'avoir un espace D très faible, voire nul, ce qui représente un gain notable en encombrement longitudinal.

Sur les figures 3, 4 et 5, une remorque 1 à un essieu, schématisée en pointillés (pouvant notamment présenter une portion située au-dessus du toit du véhicule), est attelée à un véhicule 2 au moyen d'un dispositif d'attelage 3 conforme à l'invention. Le dispositif 3 comporte un point d'accrochage à rotule classique 4 situé à l'arrière du véhicule 2 et assurant la traction de la remorque 1, ainsi qu'une structure 5 reliant la remorque 1 à au moins un point de fixation 6 agencé sur un support amovible 7 disposé à l'avant du toit du véhicule.

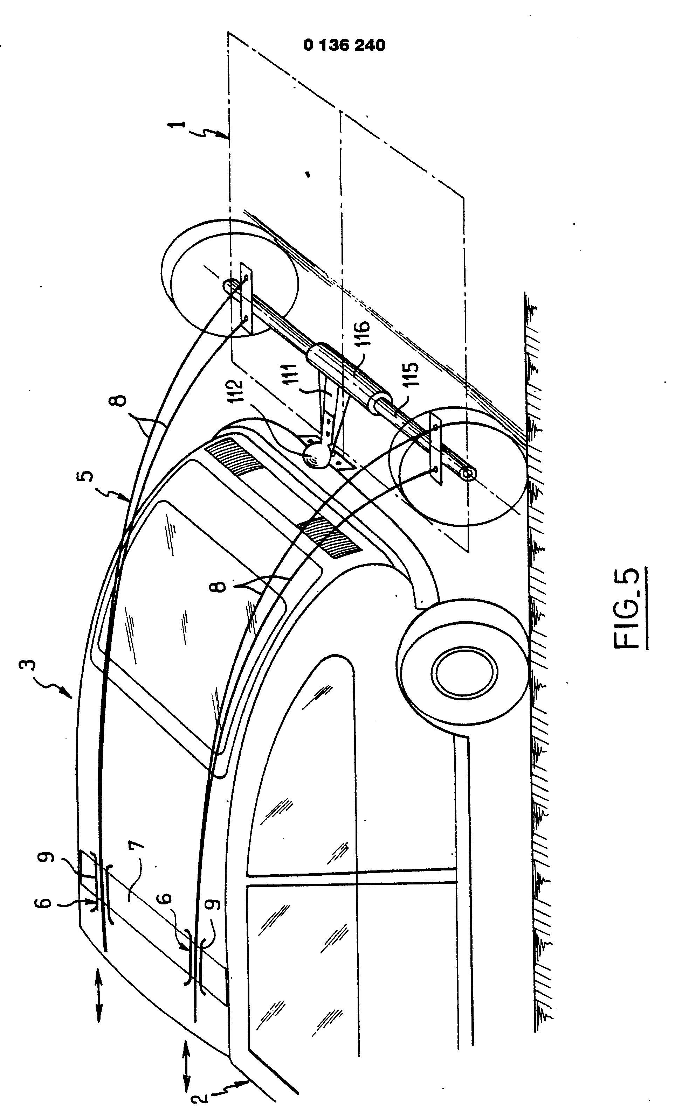

Dans la variante illustrée, la structure 5 est essentiellement formée d'une paire de brancards 8 solidaires de la remorque (ici, les extrémités arrière des brancards viennent s'articuler sur l'essieu de la remorque, ainsi que cela apparaît plus clairement en figure 5).

Conformément à un aspect fondamental de l'invention, le point de fixation 6 autorise un coulissement longitudinal de l'extrémité correspondante de la structure 5 de façon à permettre un certain débattement de ladite structure dans un plan vertical : l'extrémité avant de chaque brancard 8 est ainsi reçue à coulissement dans une glissière 9 associée, ces deux glissières étant fixées sur le support amovible 7, de sorte que l'on obtient ainsi deux points latéraux de fixation à coulisse autorisant différentes orientations des brancards 8 dans un plan vertical.

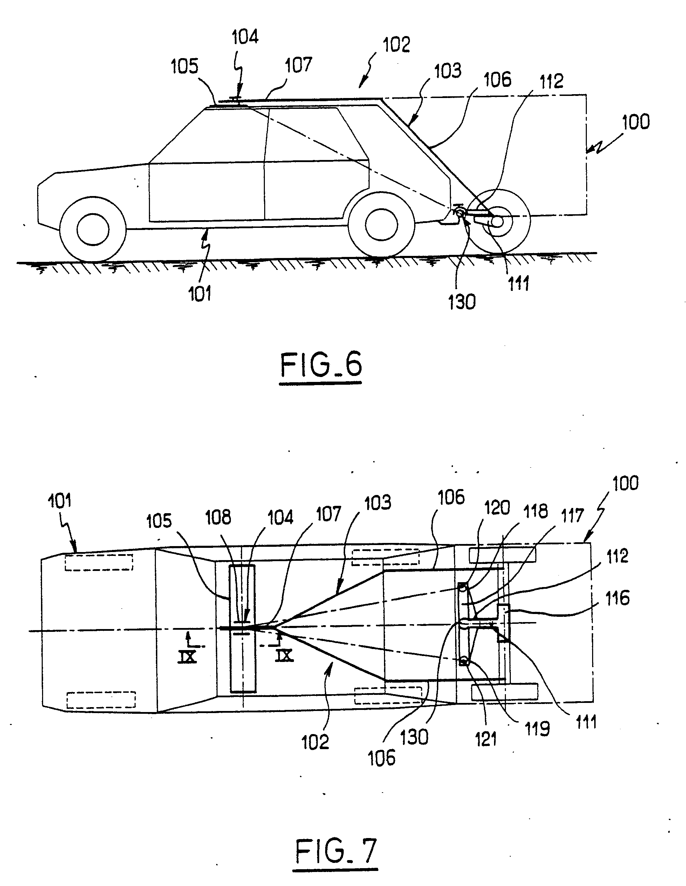

Selon une autre variante illustrée aux figures 6 à 8, une remorque 100 à un essieu est attelée à un véhicule 101 au moyen d'un autre dispositif d'attelage 102 conforme à l'invention, comportant, outre le point d'accrochage arrière classique 130, une structure 103 reliant la remorque 100 à un point de fixation 104 agencé sur un support amovible 105. Ici, la structure 103 est essentiellement formée d'une paire de brancards 106 se rejoignant vers l'avant en une extrémité commune 107.

Comme précédemment, et conformément à un aspect fondamental de l'invention, le point de fixation 104 autorise un coulissement longitudinal de l'extrémité correspondante de la structure 103 de façon à permettre un certain débattement de ladite structure dans un plan vertical : l'extrémité commune 107 est ainsi reçue à coulissement dans une glissière centrale 108 associée, fixée sur le support 105, de sorte que l'on obtient un point central de fixation à coulisse autorisant différentes orientations des brancards 106 dans un plan vertical.

La glissière centrale 108 est tout à fait analogue aux glissières latérales 9 de la première variante, et le principe de fonctionnement est aussi identique, de sorte que la suite de la description sera donnée seulement en référence à la deuxième variante pour ce qui est de la constitution des glissières, du montage du boîtier d'attelage, et du comportement du dispositif de l'invention selon l'état de la route (plat, creux, bosse).

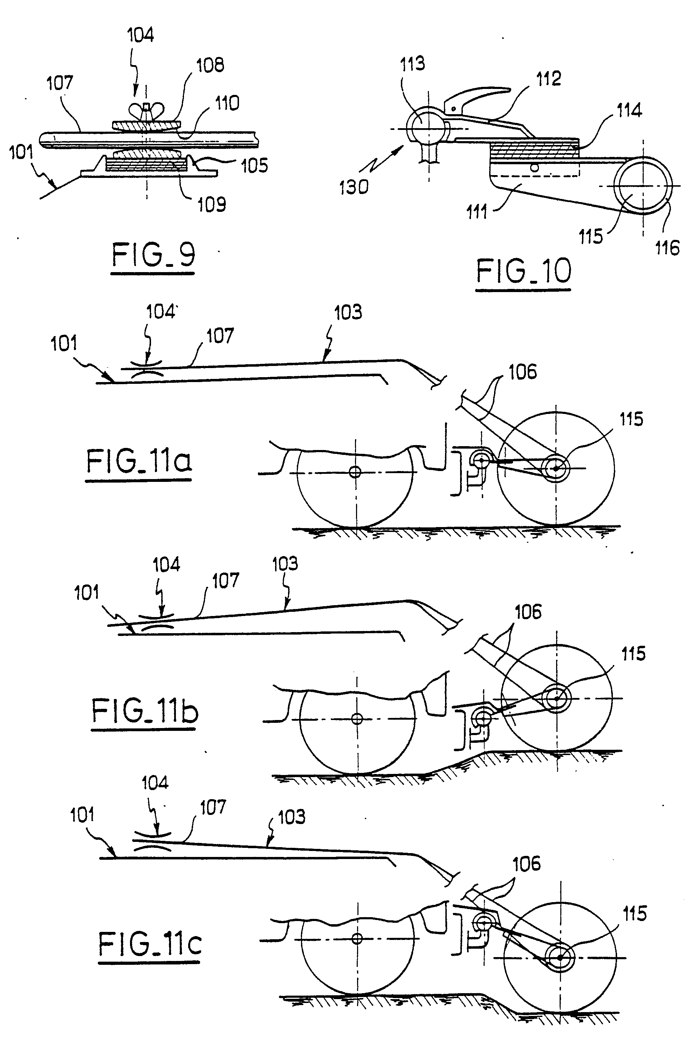

Ainsi qu'illustré en figure 9, la glissière 108 est fixée sur le support 105 en interposant avantageusement des éléments anti-vibratoires 109, et présente une forme intérieure convexe 110 facilitant le débattement de l'extrémité 107 dans un plan vertical.

Sur la figure 10, la remorque 100 présente un timon central 111 auquel est fixé un boîtier d'attelage 112 pour une rotule d'accrochage 113 prévue à l'arrière du véhicule, avec de préférence interposition d'un élément amortisseur 114 autorisant un certain débattement dans un plan vertical ; ici le timon 111 s'articule sur l'essieu 115 de la remorque par l'intermédiaire d'un manchon 116 (dans un but de simplification, des références identiques ont été portées aux figures 3 à 5 correspondant à la première variante du dispositif de l'invention).

Les figures 11a, 11b, 11c illustrent schématiquement le fonctionnement d'un dispositif d'attelage de l'invention :

figure 11a sur sol plat, l'extrémité 107 de la structure 103 à brancards est sensiblement horizontale,

figure 11b au passage d'un creux, l'essieu 115 de la remorque est provisoirement surélevé par rapport au véhicule, ce qui produit un pivotement de la structure 103, avec éventuellement un léger coulissement vers l'avant de son extrémité 107 dans la glissière centrale, au point de fixation à coulisse 104,

figure 11c au passage d'une bosse, l'essieu 115 est au contraire provisoirement surbaissé par rapport au véhicule, ce qui produit un pivotement inverse de la structure 103, avec éventuellement un léger coulissement vers l'arrière de l'extrémité 107 au point de fixation à coulisse 104.

Le fonctionnement est tout à fait analogue pour la variante des figures 3 à 5, les extrémités des brancards 8 pouvant coulisser dans leur glissière associée 9 de la même façon que l'extrémité commune 107 dans sa glissière centrale associée au point de fixation à coulisse 104.

Ainsi, avec le dispositif de l'invention, il est possible de conserver le cap pour l'ensemble véhicule et remorque, en utilisant, dans toutes les situations du sol, l'adhérence cumulée des six roues, et ce quelle que soit la trajectoire du véhicule tracteur, tout en réduisant au strict minimum l'espace séparant le véhicule de sa remorque. D'autre part, grâce à un positionnement longitudinal convenable des glissières latérales (première variante) ou de la glissière centrale (deuxième variante), le report des charges dynamiques de la remorque, lors d'un freinage du véhicule tracteur, est appliqué sensiblement à mi-longueur de l'empattement, ce qui tend à stabiliser le véhicule et à répartir également le freinage sur les quatre roues dudit véhicule.

Le dispositif de la première variante permet une grande stabilité transversale et longitudinale du fait de la présence des trois points de fixation : le point d'accrochage 4, et les deux points de fixation à coulisse latéraux 6. Ce système de 3 points forme un triangle isocèle indéformable, ce qui garantit, comme dans les types connus d'attelages fixes à 3 points d'accrochage, un bon contrôle de l'effet de roulis, et supprime l'effet de lacet de la remorque par rapport au véhicule tracteur. L'effet de galop est quant à lui bien contrôlé, grâce à la fixation élastique du boîtier d'attelage 112 sur le timon 111 (figure 10).

Pour la deuxième variante, le point central de fixation à coulisse ne peut procurer le même effet stabilisateur que les deux points latéraux de fixation à coulisse de la première variante. C'est pourquoi, toujours dans le cadre de l'invention, il est proposé de perfectionner cette deuxième variante.

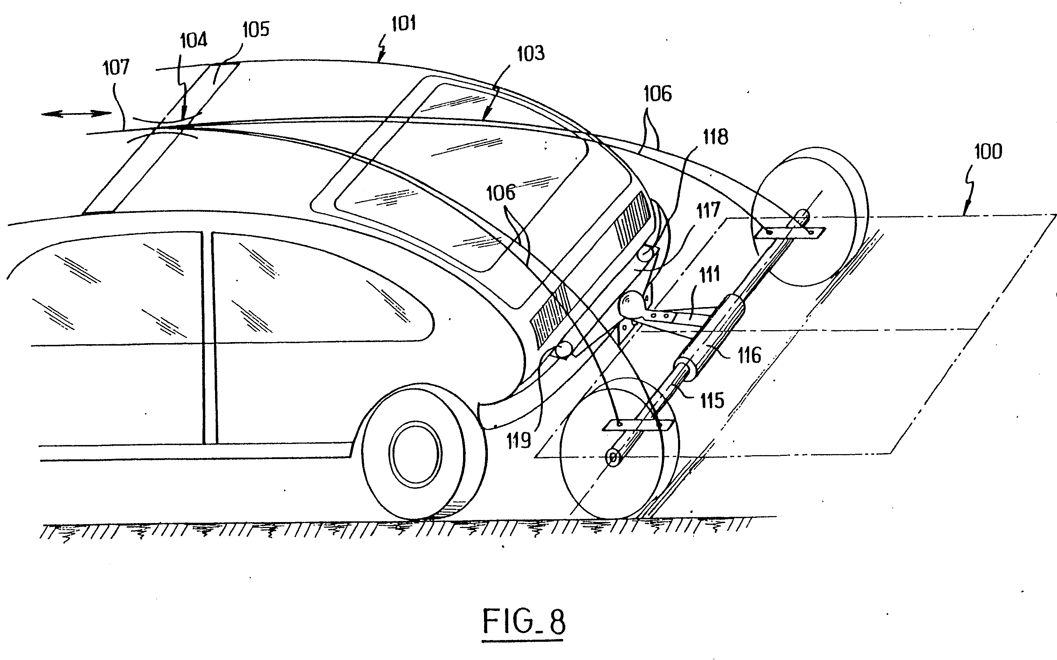

Il est en effet possible, pour cette deuxième variante, d'améliorer la stabilité de l'ensemble articulé en prévoyant une barre stabilisatrice transversale 117 (visible sur les figures 7 et 8). Cette barre 117 est solidaire du boîtier d'attelage 112, et permet un appui sur l'arrière du véhicule (le pare-choc arrière par exemple) en deux points 118, 119 situés de part et d'autre dudit boîtier, et de préférence de façon à former un alignement de trois points : le point d'accrochage 130, et les deux points d'appui latéral 118, 119. Il est intéressant d'associer des organes de réglage en hauteur 120, 121 pour chacun des deux appuis 118, 119 respectivement (les références 120, 121 illustrent une représentation schématique de ces organes en figure 2, l'homme de l'art pouvant aisément sélectionner un organe convenable, tel qu'un organe à ressort et vis de réglage).

Avec la barre stabilisatrice transversale 117, on retrouve un système à trois points (104, 118, 119) formant un triangle isocèle indéformable, ce qui garantit, comme précédemment, un bon contrôle de l'effet de roulis et supprime l'effet de lacet de la remorque par rapport au véhicule tracteur. L'effet de galop est quant à lui, comme pour la première variante, bien contrôlé, grâce à la fixation élastique du boîtier d'attelage sur le timon.

Le dispositif d'attelage articulé de l'invention transforme ainsi l'ensemble véhicule-remorque en un volume essentiellement rigide dans un plan horizontal, tout en conservant une indépendance dans un plan vertical. L'ensemble attelé réagit en tenue de route comme un véhicule à roues indépendantes, et peut se désolidariser comme un attelage véhicule-remorque classique.

Le dispositif de l'invention permet, avec un système articulé, d'utiliser de façon rationnelle les avantages des deux types de systèmes d'attelage : les systèmes articulés et les systèmes fixes. Enfin, sa facilité d'utilisation et son faible coût de fabrication constituent encore un avantage supplémentaire.

Il va de soi que l'invention n'est pas limitée à la réalisation particulière qui a été décrite à titre d'exemple, mais englobe au contraire toutes les variantes reprenant, avec des moyens équivalents, des caractéristiques figurant aux revendications.

**Revendications**

1. Dispositif d'attelage articulé pour atteler une remorque à un véhicule, comportant un point d'accrochage situé à l'arrière du véhicule et assurant la traction de la remorque, et une structure (5, 103) reliant la remorque à au moins un point de fixation (6, 104) agencé sur un support (7, 105) disposé à l'avant du toit du véhicule, caractérisé par le fait que ledit point de fixation autorise un coulissement longitudinal et une certaine rotation de l'extrémité correspondante de la structure (5, 103) dans un plan vertical longitudinal du véhicule tracteur.

2. Dispositif d'attelage selon la revendication 1, caractérisé par le fait que la structure (5) est essentiellement formée d'une paire de brancards (8), et que l'extrémité avant de chaque brancard est reçue à coulissement dans une glissière associée (9) fixée sur le support (7), de sorte que l'on obtient ainsi deux points latéraux de fixation à coulisse (6) autorisant différentes orientations des brancards (8) dans un plan vertical.

3. Dispositif d'attelage selon la revendication 2, caractérisé par le fait que les glissières (9) sont fixées sur le support (7) de façon à être à l'intérieur de l'empattement du véhicule, et de préférence à mi-longueur.

4. Dispositif d'attelage selon l'une des revendications 2 et 3, caractérisé par le fait que les glissières (9) sont fixées sur le support par l'intermédiaire d'éléments anti-vibratoires (109).

5. Dispositif d'attelage selon l'une des revendications 2 à 4, caractérisé par le fait que les glissières (9) présentent une forme intérieure (110) convexe.

6. Dispositif d'attelage selon la revendication 1, caractérisé par le fait que la structure (103) est essentiellement formée d'une paire de brancards (106) se rejoignant vers l'avant en une extrémité commune (107) reçue à coulissement dans une glissière centrale associée (108) fixée sur le support (105), de sorte que l'on obtient ainsi un point central de fixation à coulisse (104) autorisant différentes orientations des brancards (106) dans un plan vertical.

7. Dispositif d'attelage selon la revendication 6, caractérisé par le fait que la glissière centrale (108) est fixée sur le support (105) par l'intermédiaire d'éléments anti-vibratoires (109).

8. Dispositif d'attelage selon l'une des revendications 6 et 7, caractérisé par le fait que la glissière centrale (108) présente une forme intérieure (110) convexe.

9. Dispositif d'attelage selon l'une des revendications 6 à 8, caractérisé par le fait que la glissière centrale (108) est située à l'intérieur de l'empattement du véhicule, et de préférence à mi-longueur.

10. Dispositif d'attelage selon l'une des revendications 1 à 9, caractérisé par le fait que la remorque (1, 100) comporte un timon (111) auquel est fixé un boîtier d'attelage (112) pour une rotule d'accrochage prévue à l'arrière du véhicule.

11. Dispositif d'attelage selon la revendication 10, caractérisé par le fait que le boîtier d'attelage (112) est fixé au timon (111) avec interposition d'un amortisseur (114) autorisant un débattement vertical.

12. Dispositif d'attelage selon l'une des revendications 10 et 11, caractérisé par le fait que la remorque (100) comporte une barre stabilisatrice transversale (117), de laquelle est solidaire le boîtier d'attelage (112), permettant un appui sur l'arrière du véhicule en deux points (118, 119) situés de part et d'autre dudit boîtier.

13. Dispositif d'attelage selon la revendication 12, caractérisé par le fait que les points d'appui (118, 119) et le point d'accrochage (130) sont alignés.

14. Dispositif d'attelage selon l'une des revendications 12 et 13, caractérisé par le fait que la barre stabilisatrice transversale (117) comporte un organe de réglage en hauteur (120, 121) pour chacun des deux appuis (118, 119).

## Claims

1. An articulated fastening device for fastening a trailer to a vehicle, comprising a hooking point situated at the rear of the vehicle and allowing the trailer to be pulled, and a structure (5, 103) connecting the trailer to at least one fixing point (6, 104) arranged on a support (7, 105) positioned at the front of the roof of the vehicle, characterised in that said fixing point allows longitudinal sliding and a certain amount of rotation by the corresponding end of the structure (5, 103) in a longitudinal vertical plane of the pulling vehicle.

2. A fastening device according to Claim 1, characterised in that the structure (5) is essentially formed by a pair of shafts (8), and in that the front end of each shaft is received in sliding fashion in an associated slideway (9) fixed on the support (7) so that two lateral sliding fixing points (6) allowing various orientations of the shafts (8) in a vertical plane are obtained.

3. A fastening device according to Claim 2, characterised in that the slideways (9) are fixed on the support (7) so as to be inside the wheel-base of the vehicle, and preferably halfway along its length.

4. A fastening device according to one of Claims 2 and 3, characterised in that the slideways (9) are fixed on the support by means of antivibratory elements (109).

5. A fastening device according to one of Claims 2 to 4, characterised in that the slideways (9) have a convex internal shape (110).

6. A fastening device according to Claim 1, characterised in that the structure (103) is essentially formed by a pair of shafts (106) which are joined together towards the front at a common end (107) which is received in sliding fashion in an associated central slideway (108) fixed on the support (105), so that a central sliding fixing point (104) allowing various orientations of the shafts (106) in a vertical plane is obtained.

7. A fastening device according to Claim 6, characterised in that the central slideway (108) is fixed on the support (105) by means of antivibratory elements (109).

8. A fastening device according to one of Claims 6 and 7, characterised in that the central slideway (108) has a convex internal shape (110).

9. A fastening device according to one of Claims 6 to 8, characterised in that the central slideway (108) is situated inside the wheel-base of the vehicle, and preferably halfway along its length.

10. A fastening device according to one of Claims 1 to 9, characterised in that the trailer (1, 100) comprises a pole (111) to which is fixed a fastening housing (112) for a ball-and-socket joint provided at the rear of the vehicle.

11. A fastening device according to Claim 10, characterised in that the fastening housing (112) is fixed to the pole (111) with interposition of a damping device (114) allowing vertical deflection.

12. A fastening device according to one of Claims 10 and 11, characterised in that the trailer (100) comprises a transverse stabilizing rod (117) with which the fastening housing (112) is integral, allowing bearing on the rear of the vehicle at two points (118, 119) situated on either side of said housing.

13. A fastening device according to Claim 12, characterised in that the bearing points (118, 119) and the hooking point (130) are aligned.

14. A fastening device according to one of Claims 12 and 13, characterised in that the transverse stabilizing rod (117) comprises a height-adjustment member (120, 121) for each of the two bearings (118, 119).

**Patentansprüche**

1. Gelenkkupplungsvorrichtung für das Ankuppeln eines Anhängers an ein Fahrzeug, mit einem Anhängepunkt, der am Heck des Fahrzeuges angeordnet ist, und der das Ziehen des Anhängers sicherstellt, und einem Aufbau (5, 103), der den Anhänger mit mindestens einem Befestigungspunkt (6, 104) verbindet, der auf einer Unterstützung (7, 105) angebracht ist, die im vorderen Bereich des Daches des Fahrzeuges angebracht ist, dadurch gekennzeichnet, daß der genannte Befestigungspunkt ein längsseitiges Verschieben und eine gewisse Rotation des entsprechenden äußeren Endes des Aufbaus (5, 103) in vertikaler Ebene längs des ziehenden Fahrzeuges ermöglicht.

2. Kupplungsvorrichtung nach Anspruch 1, dadurch gekennzeichnet, daß der Aufbau (5) im wesentlichen aus einem Paar von Trägern (8) besteht, und daß das äußere Ende vor jedem Träger verschiebbar in einer zugeordneten Gleitschiene (9), die auf der Unterstützung (7) angebracht ist, aufgenommen ist, so daß man auf diese Weise zwei seitliche Verschiebungsfestpunkte (6) hat, die verschiedene Ausrichtungen der Träger (8) in vertikaler Ebene ermöglichen.

3. Kupplungsvorrichtung nach Anspruch 2, dadurch gekennzeichnet, daß die Gleitschienen (9) auf der Unterstützung (7) angebracht sind, so daß sie innerhalb des Radstandes des Fahrzeuges sind, und vorzugsweise auf halber Länge.

4. Kupplungsvorrichtung nach einem der Ansprüche 2 und 3, dadurch gekennzeichnet, daß die Gleitschienen (9) auf der Unterstützung durch Zwischenschalten von vibrationsausgleichenden Elementen (109) angebracht sind.

5. Kupplungsvorrichtung nach einem der Ansprüche 2 bis 4, dadurch gekennzeichnet, daß die Gleitschienen (9) eine konvexe Innenform (110) haben.

6. Kupplungsvorrichtung nach Anspruch 1, dadurch gekennzeichnet, daß der Aufbau (103) im wesentlichen aus einem Paar von Trägern (106) besteht, die sich im vorderen Bereich zu einem gemeinsamen Ende (107) vereinigen, das verschiebbar in einer zugeordneten zentralen Gleitschiene (108) aufgenommen ist, die auf der Unterstützung (105) aufgebracht ist, so daß man auf diese Weise einen zentralen Verschiebungsfestpunkt (104) erhält, der verschiedene Ausrichtungen der Träger (106) in vertikaler Ebene ermöglicht.

7. Kupplungsvorrichtung nach Anspruch 6, dadurch gekennzeichnet, daß die zentrale Gleitschiene (108) unter Zwischenschaltung von vibrationsausgleichenden Elementen (109) auf einer Unterstützung (105) angebracht ist.

8. Kupplungsvorrichtung nach einem der Ansprüche 6 und 7, dadurch gekennzeichnet, daß die zentrale Gleitschiene (108) eine konvexe Innenform (110) hat.

9. Kupplungsvorrichtung nach einem der Ansprüche 6 bis 8, dadurch gekennzeichnet, daß die zentrale Gleitschiene (108) innerhalb des Radstandes des Fahrzeuges und vorzugsweise auf halber Länge angebracht ist.

10. Kupplungsvorrichtung nach einem der Ansprüche 1 bis 9, dadurch gekennzeichnet, daß der Anhänger (1, 100) eine Deichsel (111) umfaßt, an der ein Kupplungsgehäuse (112) für ein Anhängekugelgelenk angebracht ist, das am Heck des Fahrzeuges vorgesehen ist.

11. Kupplungsvorrichtung nach Anspruch 10, dadurch gekennzeichnet, daß das Kupplungsgehäuse (112) an der Deichsel (111), mit Zwischenschaltung eines Stoßdämpfers (114), befestigt ist, der ein vertikales Schwenken ermöglicht.

12. Kupplungsvorrichtung nach einem der Ansprüche 10 und 11, dadurch gekennzeichnet, daß der Anhänger (100) eine stabilisierende Querstange (117) umfaßt, die mit dem Kupplungsgehäuse (112) fest verbunden ist, welche das Aufstützen auf das Heck des Fahrzeuges an zwei Punkten (118, 119) erlaubt, die beiderseits des genannten Gehäuses liegen.

13. Kupplungsvorrichtung nach Anspruch 12, dadurch gekennzeichnet, daß die Stützpunkte (118, 119) und der Anhängepunkt (130) auf einer Höhe liegen.

14. Kupplungsvorrichtung nach einem der Ansprüche 12 und 13, dadurch gekennzeichnet, daß die stabilisierende Querstange (117) einen Höhenreglerorgan (120, 121) für jede der beiden Unterstützungen (118, 119) umfaßt.

0 136 240

FIG_1

FIG_2

FIG_3

FIG_4

1

FIG_5

## FIG. 6

## FIG. 7

FIG_8

0 136 240

FIG_9

FIG_10

FIG_11a

FIG_11b

FIG_11c